# EUROPÄISCHE PATENTSCHRIFT

(11) **EP 3 634 782 B1**
(45) Veröffentlichungstag und Bekanntmachung des Hinweises auf die Patenterteilung: **23.06.2021**
(21) Anmeldenummer: 18714457.1
(22) Anmeldetag: 15.03.2018
(51) Int. Cl.: B60C 23/04, H01Q 1/22, G06K 19/077

(54) **FAHRZEUGREIFEN**
VEHICLE TIRE
PNEUMATIQUE DE VÉHICULE

(30) Priorität: 07.06.2017 DE 102017209541
(43) Veröffentlichungstag der Anmeldung: 15.04.2020
(73) Patentinhaber: Continental Reifen Deutschland GmbH, 30165 Hannover (DE)
(72) Erfinder: KURZ, Martin, 30161 Hannover (DE); DIETRICH, Holger, 30938 Burgwedel (DE); EHMKE, Tobias, 30826 Garbsen (DE); MOHR, Daniel, 48653 Coesfeld (DE); WENCKEL, Mathias, 30625 Hannover (DE); BRÖKER, Benjamin, 30823 Garbsen (DE)
(74) Vertreter: Continental Corporation
(86) Internationale Anmeldenummer: PCT/EP2018/056530
(87) Internationale Veröffentlichungsnummer: WO 2018/224194

(56) Entgegenhaltungen:
- EP-A2- 1 310 386
- EP-A2- 1 978 345
- WO-A1-2015/088890
- DE-A1- 10 209 580
- JP-A- 2013 126 838
- JP-A- 2016 037 236
- JP-A- 2016 049 920
- US-A1- 2008 289 736
- US-A1- 2008 303 674
- US-A1- 2010 122 757
- US-A1- 2011 175 778

## Beschreibung

Die Erfindung betrifft einen Fahrzeugreifen.

Transponder können im Reifen für verschiedene Aufgaben eingesetzt werden. Hierzu zählt insbesondere eine Reifenidentifikation mit der ein Automobilhersteller u. a. schnell sowie automatisiert feststellen kann, aus welchem Reifenwerk ein bestimmter Reifen geliefert wurde oder ob der gelieferte Reifen der gewünschten Dimension oder Spezifikation entspricht. Moderne Transponder bestehen aus einem Elektronikbauteil bzw. -Chip, in dem Sensorelemente angeordnet sein können sowie aus einer an dieses Elektronikbauteil angeschlossenen Antenne.

Der Transponder muss in den Herstellungsprozess für Fahrzeugreifen integriert werden. Bei einer bestimmten Materialanspruchung können die Transponder zerstört werden.

Aus dem Stand der Technik sind unterschiedliche Konzepte bekannt, den Transponder im oder am Reifen anzuordnen. Alle herkömmlichen Konzepte besitzen unterschiedliche Nachteile.

Die US 2010/122757 A 1, EP 1 978 345 A2, US 2008/303674 A1, DE 10209580 A1, EP 1310 386A2, JP 2016 049920 A und WO 2015/088890 A1 offenbaren unterschiedliche Fahrzeugreifen mit Transpondern.

Der Erfindung liegt die Aufgabe zugrunde, einen Fahrzeugreifen mit einem Transponder bereitzustellen, bei dem der Transponder auf einfache Weise im Fahrzeugreifen integriert werden kann.

Gelöst wird die Aufgabe gemäß Anspruch 1.

Ein Vorteil der Erfindung ist insbesondere darin zu sehen, dass durch die neuartige Anordnung des Transponders im Reifenwulst der Transponder dauerhaft vor hohen Materialbeanspruchungen geschützt ist. Der Transponder ist in einem Bereich des Reifenwulstes platziert, der beim Abrollen des Fahrzeugreifens nur sehr geringen Materialbelastungen ausgesetzt ist. Der Reifenkern mit den Kerndrähten besitzt eine hohe Steifigkeit und kann sich nur sehr wenig verformen. Außerdem wird der Transponder durch den Kernreiter zusätzlich vor Materialbeanspruchungen geschützt.
Ein weiterer Vorteil besteht darin, dass der Transponder in einem besonderen Höhenbereich der Außenseite des Kernreiters angeordnet ist. Dadurch läßt sich eine einfache Funkverbindung mit einer hohen Signalqualität zum Transponder realisieren.

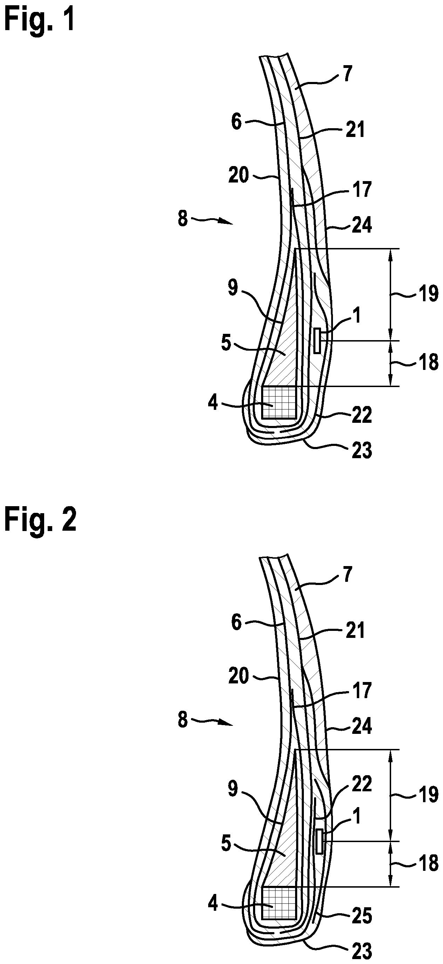

In dem Beispiel gemäß Figur 1 ist der Transponder im Reifenwulst zwischen der zweiten Karkasslage und einem Wulstband angeordnet . Der Transponder ist durch das Wulstband besonders gut vor äußeren Materialbeanspruchungen geschützt.

Erfindungsgemäβ ist vorgesehen, dass der Transponder im Reifenwulst zwischen einem Wulstband und einem Wulstverstärker angeordnet ist.
Ein erfindungsgemäßes Ausführungsbeispiel zeigt die Figur 2. Der Transponder ist durch die Anordnung hinter dem Wulstverstärker besonders gut vor äußeren Materialbeanspruchungen geschützt.

In einer weiteren vorteilhaften Weiterbildung der Erfindung ist vorgesehen, dass die Höhenabmessung in radialer Richtung des Fahrzeugreifens zwischen dem Transponder und der oberen Spitze des Kernreiters mindestens 5 mm beträgt.
Dadurch ist der Transponder in einem Bereich des Reifenwulstes angeordnet in dem die mechanische Beanspruchung im Fahrbetrieb des Fahrzeugreifens relativ gering ist.

In einer weiteren vorteilhaften Weiterbildung der Erfindung ist vorgesehen, dass der Kern und der Kernreiter mit einer Gummilage überdeckt ist.

Die Gummilage ist eine gummierte Textil- oder Stahlcordlage und wird als "Flipper-Bauteil" bezeichnet und trägt zur Stabilität des Reifenwulstes bei.
Die Gummilage verbessert den Schutz des Transponders vor mechanischen Belastungen.

In einer vorteilhaften Weiterbildung der Erfindung ist vorgesehen, dass der Transponder mit seinen beiden Antennenteilen in Umfangsrichtung zum Reifenkern ausgerichtet ist. Dadurch besitzt der Transponder eine optimale Ausrichtung im Reifenwulst, um eine optimale Sende- und Empfangsleistung zu gewährleisten.

In einer weiteren vorteilhaften Weiterbildung der Erfindung ist vorgesehen, dass der Transponder ein folienförmiger RFID-Transponder ist,
wobei der Transponder-Chip und die Antennen in einer Trägerfolie eingebettet sind. Folienförmige RFID-Transponder besitzen eine sehr geringe Materialdicke. Durch die hohe Biegsamkeit dieser Transponder sind sie besonders für den Einsatz zwischen Reifenbauteilen geeignet.

In einer weiteren vorteilhaften Weiterbildung der Erfindung ist vorgesehen, dass die Trägerfolie eine Materialdicke von kleiner als 1mm besitzt.
Bei dieser Materialdicke besitzt der folienförmige RFID-Transponder eine besonders hohe Flexibilität. Das flexible Kunststoffmaterial lässt sich gut mit dem Gummimaterial der umgebenden Reifenbauteile verbinden.

In einer weiteren vorteilhaften Weiterbildung der Erfindung ist vorgesehen, dass die Trägerfolie aus einem flexiblen Kunststoff besteht.
In einer weiteren vorteilhaften Weiterbildung der Erfindung ist vorgesehen, dass der folienförmige Transponder eine zusätzliche Materialbeschichtung aufweist.

Durch diese Materialbeschichtung lässt sich die Verbindung zu den angrenzenden Reifenbauteilen verbessern.
In einer weiteren vorteilhaften Weiterbildung der Erfindung ist vorgesehen, dass die Materialbeschichtung ein Gummimaterial umfasst.

In einer weiteren vorteilhaften Weiterbildung der Erfindung ist vorgesehen, dass die Materialbeschichtung ein Haftvermittlersystem umfasst,
wobei mit dem Haftvermittlersystem die Anbindung an die umgebenden Reifenbauteile verbessert wird.
Das Haftvermittlersystem könnte beispielsweise eine chemische Lösung sein, die auf den folienförmigen RFID-Transponder aufgetragen wird, um die Anbindung zu den angrenzenden Reifenbauteilen zu verbessern. Es könnte sich dabei auch um eine chemische Lösung handeln, die erst bei der Reifenvulkanisation aktiviert wird.

In einer weiteren vorteilhaften Weiterbildung der Erfindung ist vorgesehen, dass der Transponder eine Breite zwischen 3 und 20 mm sowie eine Länge zwischen 30 und 100 mm aufweist.
Bei diesen Abmessungen des Transponders lässt sich dieser auf einfache Weise zwischen den Reifenbauteilen anordnen.

In einer weiteren vorteilhaften Weiterbildung der Erfindung ist vorgesehen, dass der Transponder ein Transponder mit zwei spiralförmigen Antennen ist.
Diese Art von Transpondern weisen eine hohe Dauerhaltbarkeit auf und eigenen sich daher für den Einsatz zwischen Reifenbauteilen.

In einer weiteren vorteilhaften Weiterbildung der Erfindung ist vorgesehen, dass der Transponder mit den zwei spiralförmigen Antennen zwischen zwei Materialagen aus Gummimaterial eingebettet ist.
Dadurch wird die Dauerhaltbarkeit des Transponders wesentlich verbessert.

In einer weiteren vorteilhaften Weiterbildung der Erfindung ist vorgesehen, dass der Transponder bei der Vorkonfektionierung der Reifenbauteilgruppe aus Reifenkern und Kernreiter aufgebracht wird.
Der Transponder lässt sich bei der Vorkonfektionierung dieser Reifenbauteilgruppe einfach auf der Außenseite des Kernreiters platzieren.

In einer weiteren vorteilhaften Weiterbildung der Erfindung ist vorgesehen, dass der Transponder im Fahrzeugreifen in Verbindung mit einer Vorrichtung zur indirekten Überwachung eines Reifendruckes genutzt wird,
wobei die Vorrichtung für die indirekte Überwachung eine Information zu einem Reifenwechsel von dem Transponder erhält.

Der Transponder besitzt eine individuelle Reifenidentifikation. Das Fahrzeug besitzt z.B. im Radhaus eine Lesegerät zum Auslesen der Reifenidentifikation. Bei einem Reifenwechsel erkennt die Vorrichtung für die indirekte Überwachung, dass ein neuer Reifen montiert worden ist und führt anschließend automatisch ein Systemreset durch. Die Vorrichtung für die indirekte Überwachung des Reifendruckes werden ebenfalls als Deflation Detection System (DDS) bezeichnet.
Bei herkömmlichen Vorrichtung für eine indirekte Überwachung des Reifendruckes muss der Fahrer immer nach einem Reifenwechsel den Systemreset manuell durchführen. Außerdem sind auf dem Transponder weitere Informationen gespeichert, durch die die Vorrichtung für die indirekte Überwachung mit einer höheren Genauigkeit arbeiten kann. Diese Informationen umfassen Angaben zum Hersteller, zur Reifendimension, zum exakten Reifenumfang und zur Reifenkonstruktion.

Anhand mehrerer Ausführungsbeispiele soll die Erfindung näher erläutert werden. Es zeigen:
Fig. 1: einen Reifenwulst
Fig. 2: einen Reifenwulst
Fig. 3: eine Aufsicht auf den folienförmige RFID-Transponder
Fig. 4: eine Aufsicht auf den Transponder mit spiralförmigen Antennen

Die Figur 1 zeigt schematisch den Querschnitt eines Reifenwulstes 8.
Der Transponder 1 ist im Reifenwulst 8 zwischen einer zweiten Karkasslage 21 und der Reifenaußenseite 24 angeordnet. Es handelt sich insb. um eine Reifenwulstkonstruktion für NFZ-Reifen.

Bei dieser nicht erfindungsgemäßen Ausführung ist der Transponder 1 zwischen der zweiten Karkasslage 21 und dem Wulstband 22 angeordnet, welches ebenfalls als Chafer bezeichnet wird. Die erste Karkasslage 6 bildet im Reifenwulst 8 einen Lagenumschlag 17, der um den Kernreiter 5 und den Reifenkern 4 herumgeführt ist. Der Reifenkern 4 umfasst eine Vielzahl von Drahtkernen und hat daher eine sehr hohe Materialsteifigkeit. Durch diese Materialsteifigkeit des Reifenkerns ist der Transponder in einer besonders beruhigten Materialzone des Fahrzeugreifens angeordnet, die nur geringen Materialbelastungen ausgesetzt ist.
Um den Kernreiter 5 und den Reifernkern 4 kann optional eine zusätzliche Gummilage 9 angeordnet sein, die ebenfalls als "Flipper-Bauteil" bezeichnet wird.
Bei der Gummilage handelt es sich um eine gummierte Textil- oder Stahlcordlage.
Die Höhe 18 zwischen Transponder 1 und Unterseite des Kernreiters 5 beträgt mindestens 3 mm, vorzugsweise mindestens 5 mm oder mindestens 7 mm. Durch die höhere
Positionierung des Transponders 1 läßt sich die Signalübertragung zum Empfangsgerät besser realisieren.
Außerdem beträgt die Höhe 19 zwischen Transponder 1 und der Spitze des Kernreiters 5 mindestens 5 mm, vorzugsweise mindestens 7 mm oder mindestens 9 mm.
Die Daten des Transponders lassen sich dadurch sehr gut mit einem externen Lesegerät auslesen.

Die Figur 2 zeigt ein weiteres Ausführungsbeispiel.
Der Transponder 1 ist im Reifenwulst 8 zwischen einer zweiten Karkasslage 21 und der Reifenaußenseite 24 angeordnet. Es handelt sich insb. um eine Reifenwulstkonstruktion für NFZ-Reifen.
Bei dieser erfindungsgemäßen Ausführung ist der Transponder 1 zwischen dem Wulstband 22 und einem Wulstverstärker 25 angeordnet, der Stahlcordfestigkeitsträger aufweisen kann. Die anderen Reifenbauteile entsprechen den in der Fig. 1 dargestellten Reifenbauteilen.

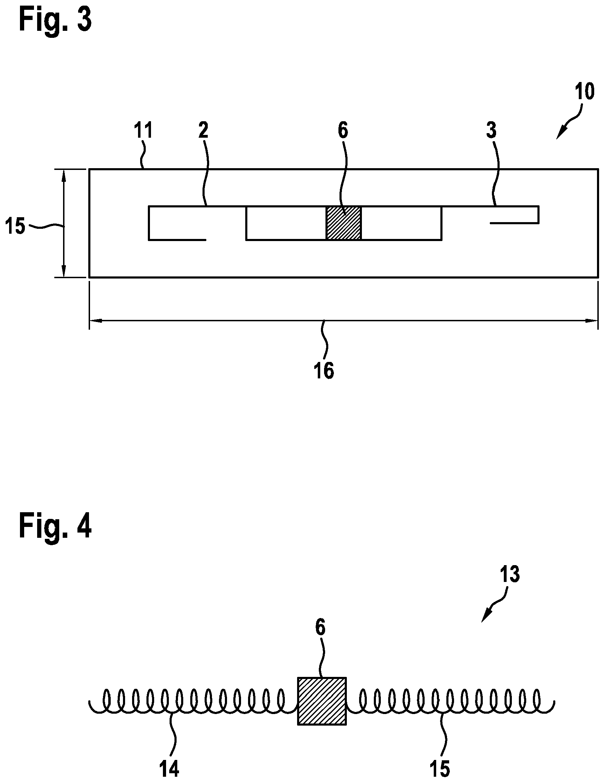

Die Figur 3 zeigt eine Aufsicht auf den folienförmigen RFID-Transponder. Der Transponder umfasst im Wesentlichen in der Mitte den Transponder-Chip 6 und die beiden angebundenen Antennen 2 und 3. Alle Bauteile sind in eine Trägerfolie 11 eingebettet, die aus Kunststoff besteht und eine hohe Flexibilität besitzt. Die Materialdicke des folienförmigen RFID-Transponders beträgt weniger als 1 mm. Die Länge 16 des Transponders beträgt zwischen 30 und 100 mm. Die Breite 15 des Transponders beträgt zwischen 3 und 20 mm.

Die Figur 4 zeigt ein Ausführungsbeispiel für einen Transponder mit zwei spiralförmigen Antennen 13 und 14, die an den Transponder-Chip 6 angebunden sind.
Die Antennen 13 und 14 bestehen aus einem Metall und besitzen eine hohe Dauerfestigkeit.
Der Transponder 13 kann optional zwischen zwei Materialstreifen aus Gummi eingebettet sein, bevor er bei der Vorkonfektionierung zwischen dem Reifenkern und dem Kernreiter platziert wird.

### Bezugszeichenliste

- 1: Transponder
- 2: linke Antenne
- 3: rechte Antenne
- 4: Reifenkern
- 5: Kernreiter bzw. Apex
- 6: Erste Karkasslage
- 7: Seitenwand
- 8: Reifenwulst
- 9: Gummibauteil
- 10: Folienförmiger RFID-Transponder
- 11: Trägerfolie
- 12: Länge des Folienförmigen RFID-Transponders
- 13: Transponder mit zwei spiralförmigen Antennen
- 14: Linke spiralförmige Antenne
- 15: Rechte spiralförmige Antenne
- 16: Länge des Transponders
- 17: Äußere Lagenumschlag der Karkasslage
- 18: Höhe zwischen Transponder und Unterseite des Kernreiters
- 19: Höhe zwischen Transponder und Spitze des Kernreiters
- 20: Reifeninnenseele
- 21: Zweite Karkasslage mit Stahlcordfestigkeitsträgern
- 22: Wulstband bzw. Chafer
- 23: Äußeres Gummibauteil bzw. Rimstrip
- 24: Reifenaußenseite
- 25: Wulstverstärker

## Patentansprüche

1. Fahrzeugreifen mit einem Laufstreifen, einem Reifengürtel, einer Reifenkarkasse mit mindestens einer Karkasslage (6), Seitenwänden (7) und einem Reifenwulst (8) mit einem Reifenkern (4) sowie einem Kernreiter (5),
wobei der Reifenkern (4) im Querschnitt eine Vielzahl von Festigkeitsträgern umfasst und der Kernreiter (5) auf seiner Unterseite an der Oberseite des Reifenkerns (4) angebunden ist,
wobei der Fahrzeugreifen ferner einen Transponder (1) mit einen Transponderchip (6) und eine an den Transponderchip (6) angebundende Antenne (2, 3, 14, 15) aufweist,
wobei die Höhenabmessung (18) in radialer Richtung des Fahrzeugreifens zwischen dem Transponder (1) und der Unterseite des Kernreiters (5) mindestens 3 mm beträgt.
**dadurch gekennzeichnet, dass**
der Transponder (1) im Reifenwulst (8) zwischen einer zweiten Karkasslage (21) und der Reifenaußenseite (24) angeordnet ist und wobei der Transponder (1) im Reifenwulst außerdem zwischen einem Wulstband (22) und einem Wulstverstärker (25) angeordnet ist.

2. Fahrzeugreifen nach Anspruch 1,
**dadurch gekennzeichnet, dass**
die Höhenabmessung (19) in radialer Richtung des Fahrzeugreifens zwischen dem Transponder (1) und der oberen Spitze des Kernreiters (5) mindestens 5 mm beträgt.

3. Fahrzeugreifen nach einem der vorhergehenden Ansprüche,
**dadurch gekennzeichnet, dass**
der Kern (4) und der Kernreiter (5) mit einer Gummilage (9) überdeckt ist.

4. Fahrzeugreifen nach einem der vorhergehenden Ansprüche,
**dadurch gekennzeichnet, dass**
der Transponder (1) mit seiner Antenne (2, 3, 14, 15) in Umfangsrichtung zum Reifenkern (4) ausgerichtet ist.

5. Fahrzeugreifen nach einem der vorhergehenden Ansprüche,
**dadurch gekennzeichnet, dass**
der Transponder (1) ein folienförmiger RFID-Transponder (10) ist,
wobei der Transponder-Chip (6) und die Antenne (2, 3) in einer Trägerfolie (16) eingebettet sind.

6. Fahrzeugreifen nach Anspruch 5,
**dadurch gekennzeichnet, dass**
die Trägerfolie (16) eine Materialdicke von kleiner als 1mm besitzt.

7. Fahrzeugreifen nach Anspruch 5,
**dadurch gekennzeichnet, dass**
die Trägerfolie (16) aus einem flexiblen Kunststoff besteht.

8. Fahrzeugreifen nach Anspruch 5,
**dadurch gekennzeichnet, dass**
der folienförmige Transponder (10) eine zusätzliche Materialbeschichtung aufweist.

9. Fahrzeugreifen nach Anspruch 8,
**dadurch gekennzeichnet, dass**
die Materialbeschichtung ein Gummimaterial umfasst.

10. Fahrzeugreifen nach Anspruch 8,
**dadurch gekennzeichnet, dass**
die Materialbeschichtung ein Haftvermittlersystem umfasst,
wobei mit dem Haftvermittlersystem die Anbindung an die umgebenden Reifenbauteile verbessert wird.

11. Fahrzeugreifen nach einem der vorhergehenden Ansprüche,
**dadurch gekennzeichnet, dass**
der Transponder (1, 10, 13) eine Breite zwischen 3 und 20 mm sowie eine Länge (16) zwischen 30 und 100 mm aufweist.

12. Fahrzeugreifen nach einem der vorhergehenden Ansprüche,
**dadurch gekennzeichnet, dass**
der Transponder (1) ein Transponder (13) mit zwei spiralförmigen Antennen ist.

13. Fahrzeugreifen nach Anspruch 12,
**dadurch gekennzeichnet, dass**
der Transponder (13) mit den zwei spiralförmigen Antennen zwischen zwei Materialagen aus Gummimaterial eingebettet ist.

## Claims

1. Vehicle tyre having a tread, having a tyre belt, having a tyre carcass with at least one carcass ply (6), having side walls (7) and having a tyre bead (8) with a tyre core (4) and a bead filler (5),
wherein the tyre core (4) comprises, in cross section, a multiplicity of strengthening members, and the bead filler (5) is attached on its bottom side to the top side of the tyre core (4),
wherein the vehicle tyre further has a transponder (1) with a transponder chip (6) and has an antenna (2, 3, 14, 15) attached to the transponder chip (6),
wherein the height dimension (18) in a radial direction of the vehicle tyre between the transponder (1) and the bottom side of the bead filler (5) amounts to at least 3 mm,
**characterized in that**
the transponder (1) in the tyre bead (8) is arranged between a second carcass ply (21) and the tyre outer side (24) and wherein the transponder (1) in the tyre bead is also arranged between a bead strip (22) and a bead reinforcer (25).

2. Vehicle tyre according to Claim 1,
**characterized in that**
the height dimension (19) in a radial direction of the vehicle tyre between the transponder (1) and the upper tip of the bead filler (5) amounts to at least 5 mm.

3. Vehicle tyre according to either of the preceding claims,
**characterized in that**
the core (4) and the bead filler (5) are covered with a rubber ply (9).

4. Vehicle tyre according to one of the preceding claims,
**characterized in that**
the transponder (1) is oriented with its antenna (2, 3, 14, 15) in a circumferential direction with respect to the tyre core (4).

5. Vehicle tyre according to one of the preceding claims,
**characterized in that**
the transponder (1) is an RFID transponder (10) in foil form,
wherein the transponder chip (6) and the antenna (2, 3) are embedded in a carrier foil (16).

6. Vehicle tyre according to Claim 5,
**characterized in that**
the carrier foil (16) has a material thickness of less than 1 mm.

7. Vehicle tyre according to Claim 5,
**characterized in that**
the carrier foil (16) is composed of a flexible plastic.

8. Vehicle tyre according to Claim 5,
**characterized in that**
the transponder (10) in foil form has an additional material coating.

9. Vehicle tyre according to Claim 8,
**characterized in that**
the material coating comprises a rubber material.

10. Vehicle tyre according to Claim 8,
**characterized in that**
the material coating comprises an adhesion promoter system,
wherein the attachment to the surrounding tyre components is improved by means of the adhesion promoter system.

11. Vehicle tyre according to one of the preceding claims,
**characterized in that**
the transponder (1, 10, 13) has a width of between 3 and 20 mm, and a length (16) of between 30 and 100 mm.

12. Vehicle tyre according to one of the preceding claims,
**characterized in that**
the transponder (1) is a transponder (13) with two spiral-shaped antennas.

13. Vehicle tyre according to Claim 12,
**characterized in that**
the transponder (13) with the two spiral-shaped antennas is embedded between two material plies composed of rubber material.

## Revendications

1. Pneumatique de véhicule comprenant une bande de roulement, une ceinture de pneumatique, une carcasse de pneumatique dotée d'au moins une nappe de carcasse (6), des parois latérales (7) et un talon de pneumatique (8) doté d'une tringle de pneumatique (4) ainsi qu'un bourrage sur tringle (5),
la tringle de pneumatique (4) comprenant en section transversale une pluralité de renforts, et le bourrage sur tringle (5) étant relié sur sa face inférieure à la face supérieure de la tringle de pneumatique (4),
le pneumatique de véhicule présentant en outre un transpondeur (1) doté d'une puce de transpondeur (6) et une antenne (2, 3, 14, 15) reliée à la puce de transpondeur (6),
la dimension en hauteur (18) dans la direction radiale du pneumatique de véhicule entre le transpondeur (1) et la face inférieure du bourrage sur tringle (5) mesurant au moins 3 mm,
**caractérisé en ce que** le transpondeur (1) est disposé dans le talon de pneumatique (8) entre une deuxième nappe de carcasse (21) et la face extérieure de pneumatique (24), et dans lequel le transpondeur (1) est disposé dans le talon de pneumatique en outre entre une bande de talon (22) et un renforcement de talon (25) .

2. Pneumatique de véhicule selon la revendication 1, **caractérisé en ce que** la dimension en hauteur (19) dans la direction radiale du pneumatique de véhicule entre le transpondeur (1) et la pointe supérieure du bourrage sur tringle (5) mesure au moins 5 mm.

3. Pneumatique de véhicule selon l'une quelconque des revendications précédentes, **caractérisé en ce que** la tringle (4) et le bourrage sur tringle (5) sont recouverts d'une nappe de caoutchouc (9).

4. Pneumatique de véhicule selon l'une quelconque des revendications précédentes, **caractérisé en ce que** le transpondeur (1) doté de son antenne (2, 3, 14, 15) est orienté vers la tringle de pneumatique (4) dans la direction circonférentielle.

5. Pneumatique de véhicule selon l'une quelconque des revendications précédentes, **caractérisé en ce que** le transpondeur (1) est un transpondeur RFID (10) en forme de film, la puce de transpondeur (6) et l'antenne (2, 3) étant incorporées dans un film de support (16).

6. Pneumatique de véhicule selon la revendication 5, **caractérisé en ce que** le film de support (16) possède une épaisseur de matériau inférieure à 1 mm.

7. Pneumatique de véhicule selon la revendication 5, **caractérisé en ce que** le film de support (16) est composé d'une matière synthétique flexible.

8. Pneumatique de véhicule selon la revendication 5, **caractérisé en ce que** le transpondeur en forme de film (10) présente un revêtement de matériau supplémentaire.

9. Pneumatique de véhicule selon la revendication 8, **caractérisé en ce que** le revêtement de matériau comprend un matériau de caoutchouc.

10. Pneumatique de véhicule selon la revendication 8, **caractérisé en ce que** le revêtement de matériau comprend un système d'agent adhésif, le système d'agent adhésif améliorant la liaison avec les composants de pneu environnants.

11. Pneumatique de véhicule selon l'une quelconque des revendications précédentes, **caractérisé en ce que** le transpondeur (1, 10, 13) présente une largeur comprise entre 3 et 20 mm ainsi qu'une longueur (16) comprise entre 30 et 100 mm.

12. Pneumatique de véhicule selon l'une quelconque des revendications précédentes, **caractérisé en ce que** le transpondeur (1) est un transpondeur (13) doté de deux antennes en spirale.

13. Pneumatique de véhicule selon la revendication 12, **caractérisé en ce que** le transpondeur (13) doté des deux antennes en spirale est incorporé entre deux nappes de matériau en matériau de caoutchouc.
